# EUROPÄISCHE PATENTSCHRIFT

(11) **EP 3 631 877 B1**
(45) Veröffentlichungstag und Bekanntmachung des Hinweises auf die Patenterteilung: **11.10.2023**
(21) Anmeldenummer: 18734079.9
(22) Anmeldetag: 01.06.2018
(51) Int. Cl.: H01M 50/211, H01M 50/227, H01M 50/271, H01M 50/284, H01M 50/291, H01M 50/507, H01M 50/516, H01M 50/522, H01M 50/262

(54) **ENERGIESPEICHERMODUL UND VERFAHREN ZUM ZUSAMMENBAU DAVON**
ENERGY STORAGE MODULE AND METHOD FOR THE ASSEMBLY THEREOF
MODULE D'ACCUMULATION D'ÉNERGIE ET PROCÉDÉ POUR L'ASSEMBLAGE DE CEUX-CI

(30) Priorität: 01.06.2017 US 201762513597 P
(43) Veröffentlichungstag der Anmeldung: 08.04.2020
(73) Patentinhaber: Clarios Advanced Solutions GmbH, 30419 Hannover (DE)
(72) Erfinder: BIRKHOLZ, Joerg, 31157 Sarstedt (DE); JANSEN, Marco, 29229 Celle (DE); EISERMANN, Henning, 31311 Uetze (DE); JOSWIG, Ralf, 29690 Buchholz (DE); SCHWARZIEN, Benjamin, 30989 Gehrden (DE); WIEGMANN, Martin, 27246 Borstel (DE)
(74) Vertreter: Meissner Bolte Partnerschaft mbB
(86) Internationale Anmeldenummer: PCT/EP2018/064509
(87) Internationale Veröffentlichungsnummer: WO 2018/220197

(56) Entgegenhaltungen:
- EP-A1- 3 002 804
- WO-A1-2009/057894
- WO-A1-2015/016974
- WO-A1-2015/035023
- WO-A1-2018/065580
- WO-A2-2010/031857
- CN-U- 204 747 845
- KR-A- 20110 093 163
- US-B1- 9 225 035

## Beschreibung

Die vorliegende Erfindung betrifft ein Energiespeichermodul gemäß Anspruch 1. Die Erfindung betrifft außerdem ein Verfahren zum Zusammenbau eines Energiespeichermoduls gemäß Anspruch 10.

Derartige Energiespeichermodule werden in vielen Bereichen der Technik eingesetzt. Die vorliegende Erfindung betrifft insbesondere den Bereich der Energiespeichermodule für Fahrzeuge, wobei es sich bei einem Fahrzeug um ein Luft- oder Wasserfahrzeug, ein spurgeführtes Fahrzeug, ein Geländefahrzeug, oder bevorzugt um ein Straßenfahrzeug handeln kann. Als Straßenfahrzeuge werden insbesondere Personenkraftwagen, Lastkraftwagen, Busse oder Wohnmobile verstanden. In Fahrzeugen werden unterschiedliche Arten von Batteriemodulen verbaut, darunter Traktionsbatterien (insbesondere bei Elektrofahrzeugen) und Starterbatterien (Autobatterien). Genauer gesagt soll mindestens eine elektrochemische Zellbaugruppe, sowie eine Starterbatterie insbesondere dadurch festgelegt sein, dass sie zumindest einen Anteil der Energie, vorzugsweise die gesamte Energie, bereitstellt, welche zum Starten eines Fahrzeuges und/oder zum Versorgen von fahrzeuginternen Systemen (Beleuchtung, Pumpen, Zündung) notwendig ist. Als Starterbatterien werden üblicherweise Bleiakkumulatoren eingesetzt, welche jedoch insbesondere aufgrund ihrer niedrigen Energiedichten ein hohes Gewicht aufweisen. Lithiumionen-Akkumulatoren hingegen weisen eine hohe Energiedichte auf. Zudem haben Lithiumionen-Akkumulatoren beispielsweise eine höhere Lebensdauer, eine geringere Selbstentladung, eine verbesserte Schnellladefähigkeit sowie geringere Wartungsintervalle als herkömmliche Bleiakkumulatoren. WO 2009/057894 A1 und EP 3 002 804 A1 offenbaren Energiespeichermodule mit einer Vielzahl von Zellbaugruppen.

Insgesamt werden, insbesondere aufgrund der steigenden Anzahl von Energieverbrauchern, immer höhere Anforderungen an die Leistungsfähigkeit, das Gewicht, die Zuverlässigkeit und die Herstellungskosten von Zellbaugruppen und Batteriemodulen in Fahrzeugen gestellt.

Daher liegt der Erfindung die Aufgabe zugrunde, ein Energiespeichermodul für die Serienfertigung, insbesondere Großserienfertigung, rationeller zu gestalten, insbesondere im Hinblick auf automatisierte Fertigungsprozesse in Anwendungen für die Automobiltechnik. Zudem ist es eine Aufgabe der vorliegenden Erfindung, ein Energiespeichermodul derart zu gestalten, dass es zum einen zweckmäßig in modularen Fertigungsprozessen einsetzbar ist, und zum anderen besonders gut geeignet für eine spätere Verwendung in Fahrzeugen ist. Außerdem soll ein Batteriespeichermodul durch einfaches Hinzufügen oder Weglassen von Zellbaugruppen an verschiedene Energie- bzw. Leistungsanforderungen anpassbar sein. Ferner soll ein verbessertes und prozesssichereres Verfahren zum Zusammenbau für solche Energiespeichermodule angegeben werden.

Im Hinblick auf das Energiespeichermodul wird die der Erfindung zugrundeliegende Aufgabe erfindungsgemäß durch die Gegenstände des unabhängigen Patentanspruchs 1 gelöst. Im Hinblick auf das Verfahren zum Herstellen eines solchen Energiespeichermoduls wird die der Erfindung zugrundeliegende Aufgabe erfindungsgemäß durch den Gegenstand des unabhängigen Patentanspruchs 10 gelöst. Vorteilhafte Weiterbildungen sind in den abhängigen Patentansprüchen angegeben.

Demnach wird eine elektrochemische Zellbaugruppe angegeben, welche mindestens zwei Lithiumionen-Pouchzellen, ein Flächenelement zur Ausrichtung der mindestens zwei Lithiumionen-Pouchzellen und einen Zellträger aufweist. Dabei sind die mindestens zwei Lithiumionen-Pouchzellen in dem Zellträger angeordnet und stehen miteinander in einer elektrischen Verbindung. Die mindestens zwei Lithiumionen-Pouchzellen weisen eine erste und eine zweite Anschlussfahne auf. Dabei ist das Flächenelement, vorzugsweise mittig, in dem Zellträger angeordnet und ferner von den mindestens zwei Lithiumionen-Pouchzellen sandwichartig umgeben und steht zumindest bereichsweise mit diesen in Kontakt.

Der Begriff "elektrochemische Zellbaugruppe" und die Kurzform "Zellbaugruppe" wird synonym verwendet. Ferner wird der Begriff "Lithiumionen-Pouchzelle" und die Kurzform "Pouchzelle" ebenfalls synonym verwendet.

Durch den Vorschlag, die elektrochemische Zellbaugruppe derart auszubilden, dass die mindestens zwei Lithiumionen-Pouchzellen in dem Zellträger angeordnet werden und ein Flächenelement, welches mittig in dem Zellträger angeordnet ist, sandwichartig umgeben, wird eine äußerst kompakte Bauweise der Zellbaugruppe erreicht, welche einfach und durch wenige Standardbauteile realisierbar ist. Zudem ist durch die sandwichartige Anordnung der Lithiumionen-Pouchzellen um das mittig im Zellträger positionierte Flächenelement eine sichere planare Anordnung der Elemente im Zellträger gewährleistet, sodass Fertigungstoleranzen an die Zellbaugruppe sicher einzuhalten sind. Planar bedeutet in diesem Kontext, dass die Elemente, insbesondere aneinander angrenzende Elemente, flächig bzw. eben zueinander ausgerichtet sind.

Gemäß einem weiteren Aspekt sind die ersten und zweiten Anschlussfahnen der mindestens zwei Lithiumionen-Pouchzellen flächig ausgebildet und erstrecken sich zumindest im Wesentlichen senkrecht von zwei gegenüberliegenden Seiten der mindestens zwei Lithiumionen-Pouchzellen aus. Hierdurch wird die kompakte Bauweise der Zellbaugruppen zusätzlich unterstützt und eine äußerst vorteilhafte Kontaktierungsmöglichkeit angegeben.

Im Wesentlichen senkrecht von einer Seite des Zellenpakets bedeutet in diesem Zusammenhang, dass der Winkel zwischen der Seite des Zellenpakets und der jeweiligen Anschlussfahne innerhalb eines Bereich von 70 Grad bis 110 Grad, vorzugsweise innerhalb eines Bereichs von 80 Grad bis 100 Grad, und besonders bevorzugt innerhalb eines Bereichs von 85 Grad bis 95 Grad liegt. Insbesondere ist es selbstverständlich in diesem Zusammenhang äußerst bevorzugt, wenn der Winkel 90° beträgt.

Gemäß einem weiteren Aspekt sind die erste und zweite Anschlussfahne der mindestens zwei Lithiumionen-Pouchzellen biegbar. Hierdurch lässt sich in einem späteren Arbeitsschritt eine besonders einfache und schnelle Möglichkeit der elektrischen Verbindung von Zellbaugruppen untereinander realisieren. Ferner bietet dies insbesondere den weiteren Vorteil, dass eine verhältnismäßig große Kontaktfläche bereitgestellt wird, sodass ein sicheres und großflächiges Kontaktieren ermöglicht.

Gemäß einem weiteren Aspekt sind die mindestens zwei Lithiumionen-Pouchzellen in Reihe oder parallel schaltbar, sodass sich im Hinblick auf eine spätere Verwendung der Zellbaugruppen in einem Energiespeichermodul der Vorteil einer flexiblen Anpassung der Zellbaugruppen an Anwendungsrandbedingungen des Energiespeichermoduls ergibt.

Gemäß einem weiteren Aspekt steht das Flächenelement zumindest bereichsweise über eine Klebschicht mit den mindestens zwei Lithiumionen-Pouchzellen in Verbindung. Unter Berücksichtigung der sandwichartigen Anordnung der Litihiumionen-Pouchzellen um das Flächenelement im Zellträger, wird durch die bereichsweise Verklebung die planare Ausrichtung der Elemente in der Zellbaugruppe und die Einhaltung von Fertigungstoleranzen zusätzlich verbessert. Zur Verklebung des Flächenelements mit den mindestens zwei Lithiumionen-Pouchzellen wird gemäß einem weiteren Aspekt der Erfindung ein Acrylklebstoff, ein Epoxidklebstoff und/oder ein doppelseitiges Klebeband genutzt. Ein Einsatz weitere Klebstoffe, welche die Anforderungen an die Verklebung erfüllen, ist jedoch nicht ausgeschlossen.

Gemäß einem weiteren Aspekt weist das Flächenelement einen Temperatursensor auf. Hierdurch ist es möglich, den Temperaturverlauf der Zellbaugruppen im Betrieb zuverlässig zu überprüfen, sodass bei Unregelmäßigkeiten und/oder Anomalien im Temperaturverlauf Maßnahmen getroffen werden können.

Gemäß einem weiteren Aspekt ist das Flächenelement aus einem Metall oder einer Metalllegierung gefertigt. Die Verwendung eines Metalls oder einer Metalllegierung zur Ausbildung des Flächenelements sorgt vorteilhaft dafür, dass die planare Anordnung der Elemente in der Zellbaugruppe auch bei Schwankungen der Temperatur gewährleistet werden kann. Zusätzlich kann eine Wärmeleitung über das Flächenelement erzielen werden, sodass das Flächenelement als Wärmeleitelement fungiert.

Die eingangs genannte Aufgabe wird gemäß dem unabhängigen Patentanspruch 1 durch ein Energiespeichermodul gelöst, welches eine Vielzahl der elektrochemischen Zellbaugruppen, eine Energiespeicher-Steuereinrichtung zur Steuerung des Betriebs des Energiespeichers, mindestens zwei flexible Sammelschienenverbinder, einen Shunt und mindestens eine Kontaktierungsvorrichtung zum elektrischen Kontaktieren der Vielzahl von elektrochemischen Zellbaugruppen aufweist. Dabei weist die Energiespeicher-Steuerungseinrichtung eine Leiterplatte auf. Die Vielzahl von elektrochemischen Zellbaugruppen ist stapelförmig angeordnet, derart, dass sie ein Zellenpaket ausbildet. Ferner steht die Vielzahl von elektrochemischen Zellbaugruppen zumindest teilweise untereinander elektrisch in Verbindung. Der Shunt weist eine erste Oberfläche und eine zweite Oberfläche auf, wobei die erste Oberfläche des Shunts zumindest bereichsweise mit den mindestens zwei flexiblen Sammelschienenverbindern und die zweite Oberfläche zumindest bereichsweise mit der Leiterplatte der Energiespeicher-Steuerungseinrichtung in Kontakt steht.

Vorzugsweise handelt es sich bei dem Energiespeichermodul um eine Starterbatterie für ein Fahrzeug, wobei die elektrochemischen Zellbaugruppen Lithiumionen-Pouchzellen aufweisen, wodurch die eingangs genannten Vorteile von Lithiumionen-Akkumulatoren im Vergleich zu Bleiakkumulatoren realisiert werden. Durch den erfindungsgemäßen Vorschlag, die Vielzahl von elektrochemischen Zellbaugruppen stapelförmig anzuordnen, derart, dass sie ein Zellenpaket ausbildet, wird ein äußerst kompakter Aufbau des Energiespeichermoduls ermöglicht. Darüber hinaus wird die Anzahl von gleichartigen Komponenten erhöht, welche die Produktionskosten des Energiespeichermoduls deutlich senkt. Ferner werden diese Vorteile durch den Shunt unterstützt, welcher eine erste Oberfläche und eine zweite Oberfläche aufweist, wobei die erste Oberfläche des Shunts zumindest bereichsweise mit den mindestens zwei flexiblen Sammelschienenverbindern und die zweite Oberfläche zumindest bereichsweise mit der Leiterplatte der Energiespeicher-Steuerungseinrichtung in Kontakt steht. Eine Kontaktierung des Shunts an zwei Oberflächen erlaubt eine Anordnung des Shunts zwischen der Energiespeicher-Steuerungseinrichtung und den mindestens zwei Sammelschienenverbindern, derart, dass der Shunt unmittelbar mit diesen Elementen des Energiespeichermoduls in Kontakt steht. Hierdurch wird eine komplizierte Verbindung des Shunts mit den Elementen über Adapter und/oder Steckkontakte, welche viel Bauraum benötigen, verhindert.

Gemäß einem weiteren Aspekt der Erfindung sind die erste und zweite Oberfläche des Shunts mittels einer Schweißnaht, vorzugsweise mittels einer Laserstrahlschweißnaht und/oder einer Ultraschallschweißnaht, mit den mindestens zwei flexiblen Sammelschienenverbindern und der Leiterplatte der Energiespeicher-Steuerungseinrichtung verbunden. Hierdurch wird eine gezielte, örtlich festgelegte Verbindung äußerst hoher Qualität der Elemente miteinander erzielt, ohne zusätzliches Material oder Bauteile zu verwenden, welche zusätzliches Gewicht in das Energiespeichermodul einbringen würden, sowie zusätzlichen Bauraum benötigen würden. Ein weiterer Vorteil einer Verbindung mittels einer Schweißnaht, vorzugsweise einer Laserschweißnaht und/oder einer Ultraschallschweißnaht, ist die Steigerung der Automatisierung bei der Herstellung des Energiespeichermoduls.

Gemäß einem weiteren Aspekt der Erfindung ist ein erster flexibler Sammelschienenverbinder der mindestens zwei flexiblen Sammelschienenverbinder mit einer Anschlussklemme des Energiespeichermoduls elektrisch verbunden und ein zweiter flexibler Sammelschienenverbinder der mindestens zwei flexiblen Sammelschienenverbinder mit dem Zellenpaket verbunden.

Gemäß einer vorteilhaften Weiterbildung der Erfindung ist die mindestens eine Kontaktierungsvorrichtung im Wesentlichen kammförmig ausgebildet und weist eine Vielzahl von Zinken auf. Ferner ist jede der ersten und zweiten Anschlussfahnen jeweils zwischen zwei benachbarten Zinken der mindestens einen Kontaktierungsvorrichtung aufgenommen.

Somit ist es möglich, jede einzelne der Anschlussfahnen mit der Kontaktierungsvorrichtung in einem späteren Arbeitsschritt elektrisch zu verbinden. Der erfindungsgemäße Vorschlag stellt somit einen besonders schnellen und rationellen Zusammenbau eines Energiespeichermoduls zur Verfügung, insbesondere dadurch, dass die kammförmige Kontaktierungsvorrichtung auf die Anschlussfahnen der elektrochemischen Zellen aufgeschoben werden können. Es ist daher mit wenigen Handgriffen möglich, das Energiespeichermodul zusammenzubauen bzw. für einen nachfolgenden Montageschritt bereitzustellen.

Des Weiteren wirken die Zinken mit den Anschlussfahnen als eine Art Zentrierungsvorrichtung zusammen und erleichtern somit weiter den Zusammenbau. Selbstverständlich ist es in diesem Zusammenhang denkbar, dass weitere Zentrierungsvorrichtungen, insbesondere an der Kontaktierungsvorrichtung, vorgesehen sind.

Weitere Vorteile werden auch dadurch erlangt, dass bei einer Verwendung von Lithiumionen-Pouchzellen diese direkt zu einem Zellenpaket ausgebildet werden können. Das heißt, dass es beispielweise nicht mehr nötig ist, mehrere Lithiumionen-Pouchzellen durch einen vorherigen Montageschritt zu verbinden. Insbesondere wird dadurch auch die Anwendung des Energiespeichermoduls insgesamt universeller, da die einzelnen Zellen bzw. ihre Anschlussfahnen unterschiedlich zueinander ausgerichtet werden können. Somit muss also nicht vorab festgelegt werden, ob eine Reihen- oder Parallelschaltung einzelner Zellen erreicht werden soll.

Insgesamt sinken sowohl die Kosten als auch die Durchlaufzeit der Fertigung deutlich. Unter Durchlaufzeit wird in diesem Zusammenhang die Zeitspanne verstanden, welche bei der Fertigung eines Produktes zwischen dem Beginn des ersten Arbeitsvorganges und dem Abschluss des letzten Arbeitsvorganges verstreicht.

Gemäß einer vorteilhaften Weiterbildung der Erfindung weist die mindestens eine Kontaktierungsvorrichtung mindestens eine Sammelschiene und mindestens einen Träger auf, wobei die mindestens eine Sammelschiene und der mindestens eine Träger kammförmig ausgebildet sind und die Vielzahl von Zinken aufweisen.

Somit ist die Kontaktierungsvorrichtung ebenfalls modular aufgebaut, wodurch sich die Modularität des Gesamtsystems weiter erhöht, da unterschiedliche Sammelschienen eingebaut werden können. Es entstehen somit mehr Möglichkeiten zum Zusammenbau (Variantenanzahl steigt) und gleichzeitig weniger Einschränkung (Vorabfestlegungen).

Des Weiteren erhöht sich die Stabilität der Kontaktierungsvorrichtung durch den mindestens einen Träger, welcher auch weitere Zentrierungs- oder Einbauhilfen aufweisen kann.

Durch den erfindungsgemäßen Vorschlag, die Kontaktierungsvorrichtung aus mindestens einer Sammelschiene und mindestens einem Träger aufzubauen, wird zudem eine Trennung der Funktionen angestrebt. Diesbezüglich erfüllt die mindestens eine Sammelschiene die Funktion einer elektrischen Kontaktierung und der mindestens eine Träger die Funktion einer Halterung bzw. einer Befestigung und/oder einer Zentrierung bzw. einer Positionierung.

Dadurch ist es insbesondere möglich, die Kontaktierungsvorrichtung derart auszubilden oder zu gestalten, dass lediglich die mindestens eine Sammelschiene aus elektrisch leitfähigem Material ausgebildet ist, wohingegen die Kontaktierungsvorrichtung aus einem elektrisch nicht leitfähigen Material ausgebildet werden kann. Es ist somit möglich, stromführende Bereiche von Bereichen, welche keinen Strom führen, zu trennen. Als Material für den mindestens einen Träger kommt dabei beispielsweise ein Acrylnitril-Butadien-Styrol, Polycarbonat, Polyamid, Polyvinylchlorid, Polyethylenterephthalat, Polyoxymethylen oder ein Copolymer hiervon in Frage.

Gemäß einer vorteilhaften Weiterbildung der Erfindung ist die mindestens eine Sammelschiene in dem mindestens einen Träger aufnehmbar bzw. aufgenommen und/oder an ihm befestigbar bzw. befestigt.

Somit wird der Zusammenbau weiter vereinfacht, insbesondere, wenn der mindestens eine Träger festgelegte Bereiche aufweist, in welche die mindestens eine Sammelschiene aufnehmbar ist. Derartige Bereiche können beispielsweise durch eine Außenkontur des Trägers und/oder durch Stege realisiert sein. Insbesondere wird somit auch sichergestellt, dass die Sammelschiene in einer bestimmten und vorgesehenen Art und Weise mit dem mindestens einen Träger verbunden wird. Zur Befestigung eignen sich beispielsweise Fügemittel, insbesondere Klebstoffe, vorzugsweise solche in Form von Klebestreifen.

Gemäß einem weiteren Aspekt der Erfindung weist das Zellenpaket zwei Endplatten auf, welche an beiden Enden der stapelförmig angeordneten Vielzahl von elektrochemischen Zellbaugruppen vorgesehen sind. Hierdurch wird ein vorderes, bzw. hinteres Ende des Zellenpakets ausgebildet, welches das Zellenpaket vor äußeren auf die Stirnflächen des Zellenpakets wirkende Belastungen schützt.

Vorzugsweise sind die Endplatten aus Kunststoff, insbesondere aus Acrylnitril-Butadien-Styrol, Polycarbonat, Polyamid, Polyvinylchlorid, Polyethylenterephthalat, Polyoxymethylen oder ein Copolymer hiervon hergestellt.

Gemäß einer vorteilhaften Weiterbildung der Erfindung weisen die Endplatten Bohrungen auf, welche fluchtend mit Bohrungen der Vielzahl von elektrochemischen Zellbaugruppen angeordnet und ausgerichtet sind, wobei das Zellenpaket ferner eine Vielzahl von Stäben aufweist, welche durch die Bohrungen der Vielzahl von elektrochemischen Zellbaugruppen und durch die Bohrungen der Endplatten führbar oder geführt sind, um diese zu verbinden, das heißt die Vielzahl von Stäben wird durch die Bohrungen gesteckt.

Insgesamt entsteht somit ein äußerst stabiler und modularer Aufbau des Zellenpakets. Auch hier ist es wiederum möglich, den Zusammenbau des Zellenpakets an einer separaten Arbeitsstation vorzusehen, um den Fertigungsablauf weiter zu optimieren. So kann beispielsweise an einer ersten Arbeitsstation eine Vielzahl der erfindungsgemäßen elektrochemischen Zellbaugruppen gefertigt werden und an einer nachfolgenden zweiten Arbeitsstation können die Vielzahl von elektrochemischen Zellbaugruppen zusammen mit den Endplatten zu einem Zellenpaket verbunden werden, welches anschließend an eine dritte Arbeitsstation weitergegeben werden kann.

Vorzugsweise sind in jedem Zellträger und in jeder Endplatte vier Bohrungen vorgesehen bzw. angeordnet, welche besonders bevorzugt an den beiden Seiten des Zellenpakets vorgesehen sind, von welchen sich die Anschlussfahnen der elektrochemischen Zellen nicht aus erstrecken; das heißt an einer Oberseite und einer Unterseite des Zellenpakets sind jeweils zwei Bohrungen vorgesehen bzw. angeordnet.

Die beschriebene Anordnung des Zellenpakets mit einer Vielzahl von Stäben ist auch deswegen vorteilhaft, da die Stäbe zusammen mit den Bohrungen eine Zentrierungsfunktion erfüllen.

Vorzugsweise weisen die Stäbe an ihren Endbereichen Gewinde auf, um Befestigungsmittel aufschrauben zu können.

Gemäß einer vorteilhaften Weiterbildung der Erfindung ist jeweils eine Schaumplatte zwischen äußeren, also einer vorderen und einer hinteren, Zellbaugruppen der stapelförmig angeordneten Vielzahl von elektrochemischen Zellbaugruppen und den Endplatten vorgesehen.

Durch den erfindungsgemäßen Vorschlag kann erreicht werden, dass ein Anpressdruck, welcher durch die Endplatten auf das Zellenpaket, bzw. die elektrochemischen Zellbaugruppen wirkt, gleichmäßig verteilt wird. Zusätzlich besitzen die Schaumplatten eine Dämpfwirkung, wodurch das Zellenpaket und insbesondere die elektrochemischen Zellbaugruppen vor Vibrationen und/oder Stößen geschützt werden können.

Die Befestigung der Schaumplatte erfolgt vorzugsweise über einen Klebstoff, wobei die Schaumplatten besonders bevorzugt an die Endplatten geklebt werden.

Gemäß einer vorteilhaften Weiterbildung der Erfindung weist das Energiespeichermodul ferner ein Modulgehäuse und einen Deckel auf.

Als Befestigungsmittel des Modulgehäuses und des Deckels bieten sich auch hier insbesondere Schrauben, Bolzen oder Nieten an. In diesem Zusammenhang werden vorzugsweise der Deckel und/oder das Modulgehäuse mit den Endplatten des Zellenstapels verbunden, welche zu diesem Zweck Bohrungen bzw. Gewindebohrungen aufweisen.

Am Deckel sind eine Vielzahl von Einrichtungen vorgesehen, beispielsweise Anschlüsse für im Energiespeichermodul benutzte Sensoren, Entlüftungseinrichtungen und Terminals zum Kontaktieren mit einem elektrischen Verbraucher. Die Terminals zum Kontaktieren mit einem elektrischen Verbraucher sind elektrisch mit dem Anschlussbereich bzw. den Anschlussbereichen der mindestens einen Sammelschiene verbunden.

Die eingangs genannte Aufgabe wird außerdem gemäß Anspruch 10 durch ein
Verfahren zum Zusammenbau eines Energiespeichermoduls gelöst, wobei das Verfahren folgende Schritte aufweist: Bereitstellen einer Vielzahl von elektrochemischen Zellbaugruppen, wobei jede der Vielzahl von elektrochemischen Zellbaugruppen mindestens zwei Lithiumionen-Pouchzellen, einen Zellträger und ein Flächenelement zur Ausrichtung der mindestens zwei Lithiumionen-Pouchzellen aufweist und wobei jede der mindestens zwei Lithiumionen-Pouchzellen eine erste und zweite flächige Anschlussfahne aufweist; stapelförmiges Anordnen einer Vielzahl von elektrochemischen Zellbaugruppen zu einem Zellenpaket, wobei die ersten und zweiten Anschlussfahnen auf sich gegenüberliegenden ersten und zweiten Seiten des Zellenpakets angeordnet sind; Aufschieben von mindestens einer Kontaktierungsvorrichtung auf flächig ausgebildete Anschlussfahnen; Biegen der Anschlussfahnen derart, dass die Vielzahl von elektrochemischen Zellbaugruppen mit der mindestens einen Kontaktierungsvorrichtung elektrisch verbindbar oder verbunden ist; Schweißen der Anschlussfahnen an die mindestens eine Kontaktierungsvorrichtung unter Verwendung eines mehrteiligen Schweißwerkzeugs.

Der erfindungsgemäße Vorschlag die Anschlussfahnen an die mindestens eine Kontaktierungsvorrichtung zu schweißen ist insbesondere deswegen vorteilhaft, da durch das Schweißen innerhalb einer kurzen Zeitspanne eine große Kontakt- bzw. Verbindungsfläche zwischen den Anschlussfahnen und der Kontaktierungsvorrichtung geschaffen werden kann. Somit ist das Schweißen aufgrund der kurzen Bearbeitungszeit besonders gut bei automatisierten Fertigungsprozessen einsetzbar und gleichzeitig äußerst zuverlässig. Zudem kann auf weitere verbindende Bauteile, wie beispielsweise auf Schrauben, verzichtet werden und der Aufbau wird weiterhin vereinfacht. Auch ist der elektrische Widerstand bei einer Schweißverbindung deutlich geringer als bei einer Verbindung, welche beispielsweise durch Schrauben bereitgestellt wird.

Ferner wird durch die Verwendung eines mehrteiligen Schweißwerkzeugs eine hochpräzise und mechanisch sichere Ausbildung einer elektrisch leitfähigen Verbindung zwischen den flächig ausgebildeten Anschlussfahnen und der Kontaktierungsvorrichtung erzielt. Hierdurch werden der Automatisierungsgrad und die Prozessstabilität bei der Herstellung des Energiespeichermoduls gesteigert.

Gemäß einem weiteren Aspekt der Erfindung weist das (im Verfahren genutzte) mehrteilige Schweißwerkzeug eine Aufnahmevorrichtung, eine Isolierplatte und eine Druckplatte auf. Durch diesen dreiteiligen Aufbau des mehrteiligen Schweißwerkzeuges wird das vorgefertigte Zellenpaket positionssicher während der Durchführung des Schweißvorgangs der Anschlussfahnen an die mindestens eine Kontaktierungsvorrichtung fixiert. Die hochpräzise und mechanisch sichere Ausbildung einer elektrisch leitfähigen Verbindung wird so zusätzlich unterstützt.

Gemäß einem weiteren Aspekt der Erfindung weist die Aufnahmevorrichtung eine Basisplatte mit voneinander beabstandeten Positionselementen auf, wobei die Positionselemente derart auf der Basisplatte angeordnet sind, sodass das Zellenpaket mit der ersten oder zweiten Seite der Basisplatte zugewandt in die Aufnahmevorrichtung aufnehmbar bzw. aufgenommen ist. Durch die Anordnung der Positionselemente auf der Basisplatte der Aufnahmevorrichtung wird die exakte Form (unter Berücksichtigung von Toleranzen) des Zellenpakets in der Aufnahmevorrichtung abgebildet, sodass eine horizontale Bewegung des Zellenpakets während des Schweißvorgangs verhindert wird.

Die Anordnung des Zellenpakets mit der ersten oder zweiten Seite in der Aufnahmevorrichtung erlaubt zudem, dass eine einfache Zugänglichkeit zu den zu verbindenden Bereichen der ersten und zweiten Anschlussfahnen und der mindestens einen Kontaktierungsvorrichtung durchgehend gewährleistet ist. Die erste und zweite Seite des Zellenpakets beschreiben dabei die sich gegenüberliegenden Seiten des Zellenpakets auf denen die ersten und zweiten Anschlussfahnen und die mindestens eine Kontaktierungsvorrichtung angeordnet sind.

Gemäß einem weiteren Aspekt der Erfindung ist die Isolierplatte zumindest bereichsweise auf der zweiten oder ersten Seite des Zellenpakets positioniert, wobei die Isolierplatte Aussparungen aufweist, welche fluchtend mit zu verbindenden Bereichen der Anschlussfahnen und der mindestens einen Kontaktierungsvorrichtung ausgerichtet ist. Durch die Verwendung einer fluchtend ausgerichteten, Aussparungen aufweisenden Isolierplatte auf der zweiten oder ersten Seite des Zellenpakets wird ein Schutz von nicht zu verschweißenden Bereichen der auf der zweiten oder ersten Seite des Zellenpakets angeordneten Elemente ermöglicht. Die Elemente werden beispielsweise vor Wärmeeintrag oder anderen durch den Schweißvorgang ausgelösten Einflüssen geschützt.

Zudem werden durch die Aussparungen lediglich die zu verbindenden Bereiche der Anschlussfahnen und der mindestens einen Kontaktierungsvorrichtung zugänglich gemacht, sodass die Prozessstabilität und die Toleranzeinhaltung während des Schweißvorgangs erhöht wird.

Gemäß einem weiteren Aspekt der Erfindung ist die Isolierplatte aus einem Kunststoff gefertigt.

Gemäß einem weiteren Aspekt der Erfindung ist die Druckplatte auf der Isolierplatte mit dieser fluchtend angeordnet und ausgerichtet, wobei die Druckplatte ferner Aussparungen aufweist und über eine Schraubverbindung mit der Aufnahmevorrichtung verbunden ist. Eine derartige Anordnung der Druckplatte auf der Isolierplatte und eine derartige Fixierung der Druckplatte mit der Aufnahmevorrichtung ermöglicht ein gleichmäßiges, flächiges Verspannen des Zellenpakets in dem mehrteiligen Schweißwerkzeug. Ferner erfolgt eine gleichmäßig verteilte Krafteinleitung in das Zellenpaket beim Verspannen, sodass eine Schädigung des Zellenpakets und/oder einzelner Zellbaugruppen vermieden wird.

Gemäß einem weiteren Aspekt der Erfindung ist die Druckplatte aus einem Metall oder einer Metalllegierung, vorzugsweise aus Aluminium oder einer Aluminiumlegierung, gefertigt. Hierdurch wird gewährleistet, dass sich die Druckplatte einerseits beim Verspannen des Zellenpakets im mehrteiligen Schweißwerkzeug nicht unerwünscht verformt, andererseits beim Schweißvorgang auftretenden Einflüssen widersteht.

Gemäß einer vorteilhaften Weiterbildung der Erfindung weist die mindestens eine Kontaktierungsvorrichtung mindestens eine Sammelschiene und mindestens einen Träger auf, wobei die mindestens eine Sammelschiene und der mindestens eine Träger kammförmig ausgebildet sind und die Vielzahl von Zinken aufweisen.

Gemäß einem weiteren Aspekt der Erfindung weist das Zellenpaket zwei Endplatten auf, welche an beiden Enden der stapelförmig angeordneten Vielzahl von elektrochemischen Zellbaugruppen vorgesehen sind.

Gemäß einem weiteren Aspekt der Erfindung wird das Schweißen der Anschlussfahnen an die mindestens eine Kontaktierungsvorrichtung mittels eines Laserstrahlschweißverfahrens durchgeführt. Hierdurch ergibt sich der Vorteil, dass der Wärmeeintrag in den zu verbindenden Kontaktbereich sehr konzentriert und lokal begrenzt erfolgt. Außerdem kann die Einschweißtiefe in vorteilhafterweise gesteuert werden, sodass in Kombination mit dem zuvor genannten Vorteil eine mechanisch äußerst stabile und qualitativ hochwertige Verbindung im Kontaktbereich erzielt wird.

Die Erfindung wird nachfolgend anhand von Ausführungsbeispielen unter Verwendung der beiliegenden Zeichnungen näher erläutert.

Es zeigen:
- FIG. 1: eine schematische Darstellung eines Fahrzeuges;
- FIG. 2: eine schematische Darstellung einer elektrochemischen Zellbaugruppe
- FIG. 3: eine schematische Darstellung eines Zellenpakets gemäß der vorliegenden Erfindung;
- FIG. 4: eine schematische Darstellung elektrischer Elemente des Energiespeichermoduls gemäß der vorliegenden Erfindung;
- FIG. 5a: eine Explosionszeichnung einer Kontaktierungsvorrichtung gemäß der vorliegenden Erfindung;
- FIG. 5b: eine schematische Darstellung einer zusammengebauten Kontaktierungsvorrichtung gemäß FIG. 3a;
- FIG. 6a: eine schematische Darstellung eines Energiespeichermoduls gemäß der vorliegenden Erfindung in einem ersten Zustand;
- FIG. 6b: eine schematische Darstellung des Energiespeichermoduls gemäß FIG. 4a in einem zweiten Zustand;
- FIG. 6c: eine schematische Darstellung des Energiespeichermoduls gemäß FIG. 4a in einem dritten Zustand; und
- FIG. 7: eine schematische Darstellung des mehrteiligen Schweißwerkzeugs gemäß der vorliegenden Erfindung.

Nachfolgend wird die Zellbaugruppe, sowie das erfindungsgemäße Energiespeichermodul unter Bezugnahme auf die Darstellungen in den Figuren genauer beschrieben. Gleiche oder gleich wirkende Elemente und Funktionen sind hierbei mit demselben oder ähnlichen Bezugszeichen versehen.

Im Folgenden werden die Zellbaugruppe, die Kontaktierungsvorrichtung und das Energiespeichermodul derart beschrieben, dass relative Begriffe auf den Einbauzustand des Energiespeichermoduls bezogen sind. So bedeutet beispielsweise "in einem oberen Bereich" in einem im eingebauten Zustand gesehenen oberen Bereich und "in einem unteren Bereich" in einem im eingebauten Zustand gesehenen unteren Bereich.

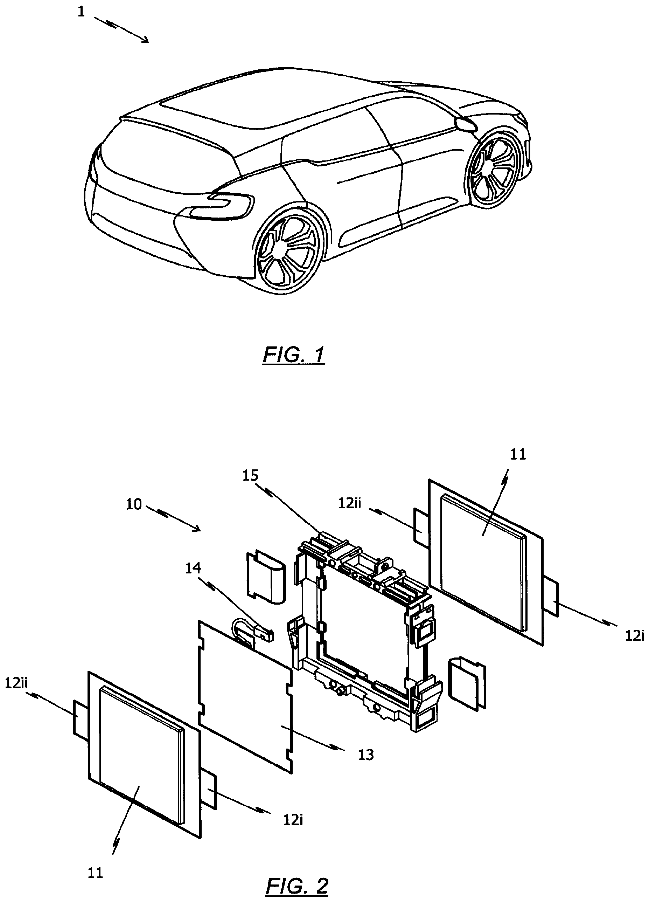

FIG. 1 zeigt eine schematische Darstellung eines Fahrzeuges 1. Ein Energiespeichermodul 400 kann hierbei insbesondere in einem in Fahrtrichtung vorderen Bereich des Fahrzeuges 1 angeordnet sein. Das Energiespeichermodul 400 weist zum Speichern von elektrischer Energie eine Vielzahl von elektrochemischen Zellbaugruppen 10 auf.

Bei dem Fahrzeug 1 kann es sich um ein Luft- oder Wasserfahrzeug, ein spurgeführtes Fahrzeug, ein Geländefahrzeug, oder bevorzugt ein Straßenfahrzeug handeln, wobei unter Straßenfahrzeug ein Personenkraftwagen, ein Lastkraftwagen, ein Bus oder ein Wohnmobil verstanden werden kann.

Das Fahrzeug 1 wird durch eine Antriebseinheit angetrieben. Bei der Antriebseinheit kann es sich um einen Verbrennungsmotor, einen Elektromotor oder eine Kombination hiervon handeln. Ein Fahrzeug 1, welches sowohl einen Elektromotor als auch einen Verbrennungsmotor aufweist, wird als Hybridfahrzeug bezeichnet. Insbesondere bei Hybridfahrzeugen und Fahrzeugen mit Verbrennungsmotor kann das Energiespeichermodul 400 als Starterbatterie vorgesehen sein.

FIG. 2 zeigt beispielhaft die elektrochemische Zellbaugruppe 10 mit zwei Lithiumionen-Pouchzellen 11. Die zwei Lithiumionen-Pouchzellen 11 sind in einem Zellträger 15 angeordnet, wobei die zwei Lithiumionen-Pouchzellen 11 auf zwei sich gegenüberliegenden Seiten des Zellträgers 15 angeordnet sind.

Die zwei Lithiumionen-Pouchzellen 11 weisen ferner jeweils eine erste flächig ausgebildete Anschlussfahne 12i und eine zweite flächig ausgebildete Anschlussfahne 12ii auf. Die erste und zweite flächig ausgebildeten Anschlussfahnen 12i, 12ii erstrecken sich dabei von zwei gegenüberliegenden Seiten der zwei Lithiumionen-Pouchzellen 11 aus. Insbesondere sind die beiden Seiten die linke und rechte Seite der elektrochemischen Zellbaugruppe 10.

Im Zellträger 15 der elektrochemischen 10 ist ferner ein Flächenelement 13 angeordnet. Das Flächenelement 13 wird in einem Steg des Zellträger 15 in einem zentralen Bereich, insbesondere mittig, aufgenommen. Das Flächenelement 13 und der Zellträger 15 weisen entsprechende Aussparungen bzw. Ausbuchtungen zur sicheren Positionierung des Flächenelements 13 im Zellträger 15 auf.

Der Zellträger 15 kann aus einem Kunststoff, beispielsweise aus Acrylnitril-Butadien-Styrol, gefertigt sein, jedoch können auch andere Materialien genutzt werden. Das Flächenelement 13 kann ferner aus einem Metall oder einer Metalllegierung, wie beispielsweise einer Aluminiumlegierung, gefertigt sein, jedoch ist auch hier der Einsatz anderer Materialien möglich.

Das Flächenelement 13 wird von den zwei Lithiumionen-Pouchzellen 11 im Zellträger 15 sandwichartig umgeben. Dies bedeutet, dass die zwei Lithiumionen-Pouchzellen 11 an einer ersten und zweiten Stirnfläche des Flächenelement 13 angeordnet werden und mit dieser in Kontakt stehen. Vorteilhafter Weise ist somit eine planare Ausrichtung der zwei Lithiumionen-Pouchzellen 11 im Zellträger 15 bzw. in der Zellbaugruppe 10 gewährleistet. Planar bedeutet in diesem Zusammenhang, dass die Elemente, insbesondere die aneinander angrenzenden Elemente, flächig bzw. eben zueinander ausgerichtet sind. Zusätzlich können die zwei Lithiumionen-Pouchzellen 11 über einen Klebstoff, beispielsweise einen Acrylklebstoff, einen Epoxidklebstoff oder ein doppelseitiges Klebeband, bereichsweise oder durchgehend flächig mit dem Flächenelement 13 verbunden werden. Hierdurch wird eine Verschiebung der zwei Lithiumionen-Pouchzellen 11 aus der planaren Ausrichtung in anschließenden Fertigungsschritten verhindert.

An einer oberen Seite des Flächenelements 13 kann zudem ein Temperatursensor 14 angebracht werden. Hierzu kann das Flächenelement 13 an seiner oberen Seite eine zusätzliche Ausbuchtung aufweisen, welche in einer weiteren Ausnehmung des Zellträgers 15 angeordnet werden kann. Der Temperatursensor 14 dient zur Messung von Temperaturen, sowie zur Bestimmung von Temperaturverläufen und Temperaturschwankungen in der Zellbaugruppe 10 im Betrieb. Der Temperatursensor 14 kann mit Einrichtungen eines übergeordneten Energiespeichermoduls 400 verbunden sein.

Auch wenn in FIG. 2 die elektrochemische Zellbaugruppe 10 nur in Bezug auf zwei Lithiumionen-Pouchzellen 11 dargestellt ist, sind Ausführungsformen der elektrochemischen Zellbaugruppe 10 mit drei oder mehr Lithiumionen-Pouchzellen 11 denkbar. Hierfür müssen gegebenenfalls ein oder mehrere zusätzliche Flächenelemente 13 im Zellträger 15 angeordnet und ausgerichtet werden.

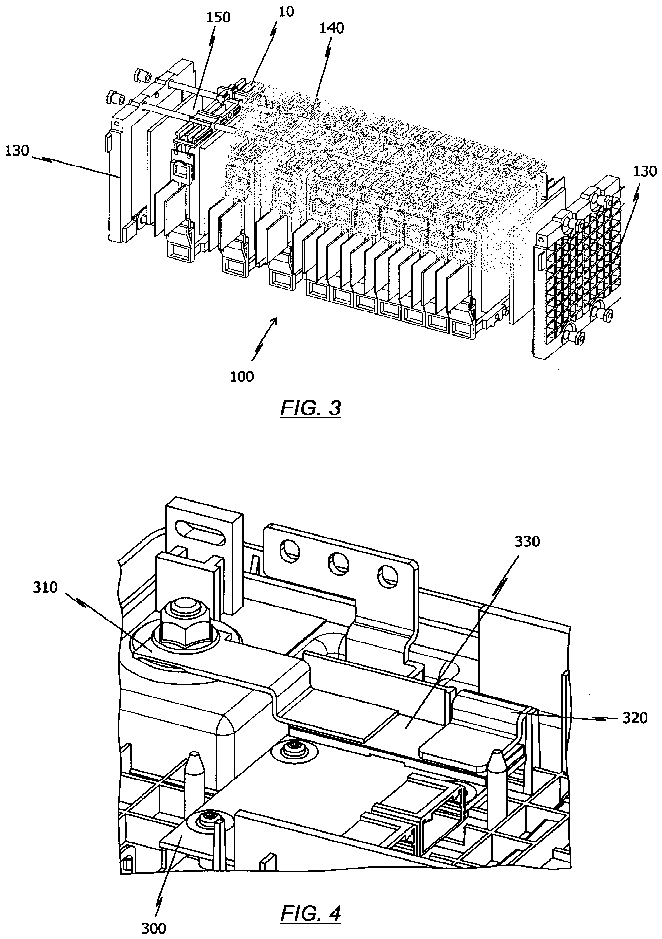

FIG. 3 zeigt ein Zellenpaket 100 mit einer Vielzahl der elektrochemischen Zellbaugruppen 10 zur Verwendung in dem erfindungsgemäßen Energiespeichermodul 400. Die elektrochemischen Zellbaugruppen 10 sind hierbei derart angeordnet, dass sich die ersten flächig ausgebildeten Anschlussfahnen 12i und die zweiten flächig ausgebildeten Anschlussfahnen 12ii der Lithiumionen-Pouchzellen 11 von zwei gegenüberliegenden Seiten des Zellenpakets 100 aus erstrecken. Insbesondere sind die beiden Seiten die linke und rechte Seite des Zellenpakets 100.

An einer oberen und einer unteren Seite sind Stäbe 140 vorgesehen, welche durch Bohrungen in den Zellträgern 15 der Vielzahl der elektrochemischen Zellbaugruppen 10 aufgenommen, bzw. durch sie hindurchgeführt sind.

An einer vorderen und an einer hinteren Seite des Zellenpakets 100 sind Endplatten 130 vorgesehen, welche einen Abschluss des Zellenpakets 100 ausbilden. Die Endplatten 130 weisen zugehörige Bohrungen auf, durch welche die Stäbe 140 aufgenommen, bzw. hindurchgeführt werden können. Zwischen den Endplatten 130 und einer ersten bzw. letzten der Vielzahl von erfindungsgemäßen elektrochemischen Zellbaugruppen 10 sind Schaumplatten 150 angeordnet.

Wie in FIG. 3 ebenfalls zu erkennen, weisen die Endplatten 130 jeweils eine Ausnehmung auf, welche in ihrer Form und Größe derart ausgebildet ist, die Schaumplatte 150 zumindest bereichsweise aufzunehmen. Vorzugsweise ist es möglich die Ausnehmung und/oder die Schaumplatte 150 mit einer Klebevorrichtung, wie beispielsweise Klebestreifen, vorzusehen.

Die Montage des Zellenpakets 100 kann unter Aufbringung einer Kraft auf die nach außen gerichteten Stirnflächen der beiden Endplatten 130 erfolgen. Die aufzubringende Kraft liegt vorzugsweise zwischen 100 Newton (N) und 400 Newton (N), kann jedoch je nach Ausführung des Zellenpakets auch abweichend von diesen Werten gewählt werden. Hierdurch kann eine nötige minimale Kompression des Zellenpakets 100 gewährleistet werden, welche beispielsweise eine Ableitung von Wärme aus dem Zellenpaket 100 oder eine Ausbildung einer ausreichenden Steifigkeit des Zellenpakets 100 gewährleistet.

FIG. 4 zeigt elektrische Elemente des erfindungsgemäßen Energiespeichermoduls 400, wie eine Energiespeicher-Steuerungseinrichtung 300, mindestens zwei flexible Sammelschienenverbinder 310 und 320, sowie einen Shunt 330.

Die Energiespeicher-Steuerungseinrichtung 300 dient zur Steuerung des Betriebs des Energiespeichermoduls 400 und weist eine Leiterplatte auf. Die mindestens zwei flexiblen Sammelschienenverbinder 310 und 320 weisen einen ersten flexiblen Sammelschienenverbinder 310 auf, welcher mit einer Anschlussklemme des Energiespeichermoduls 400 elektrisch leitend verbunden ist, sowie einen zweiten flexiblen Sammelschienenverbinder 320, welcher mit dem Zellenpaket 100 elektrisch leitend verbunden ist. Der Shunt 330 weist ferner eine erste und eine zweite Oberfläche auf, wobei die erste oder eine zweite Oberfläche mit der Leiterplatte der Energiespeicher-Steuerungseinrichtung 300 verbunden ist und die zweite oder erste Oberfläche mit dem ersten und zweiten flexiblen Sammelschienenverbinder 310 und 320. Hierdurch kann eine sehr bauraumsparende und einfach zu fertigende elektrisch leitende Verbindung zwischen dem Zellenpaket 100, der Energiespeicher-Steuerungseinrichtung 300 und einer Anschlussklemme des Energiespeichermoduls 400 realisiert werden.

Die Verbindung des Shunts 330 mit dem ersten und zweiten flexiblen Sammelschienenverbinder 310 und 320, sowie die Verbindung des Shunts 330 mit der Leiterplatte der Energiespeicher-Steuerungseinrichtung 300 wird über eine Schweißverbindung verwirklicht. In vorteilhafter Weise wird hierfür ein Laserstrahlschweißverfahren und/oder ein Ultraschallschweißverfahren genutzt. Die Verbindung des Shunts 330 mit den flexiblen Sammelschienenverbindern 310 und 320 und der Leiterplatte der Energiespeicher-Steuerungseinrichtung 300 kann dabei bereichsweise oder vollflächig erfolgen.

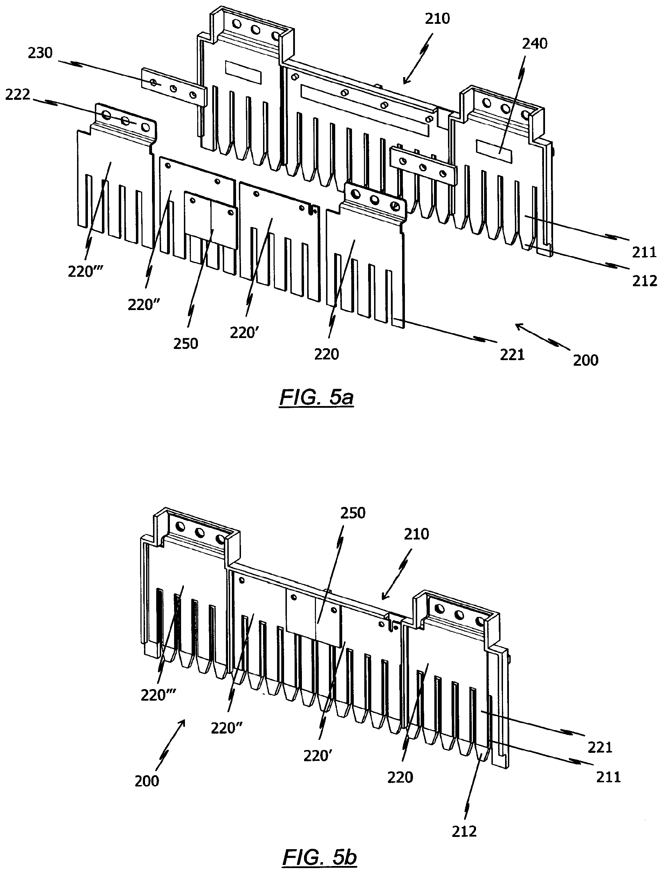

FIG. 5a zeigt eine Explosionszeichnung einer erfindungsgemäßen Kontaktierungsvorrichtung 200. Die Kontaktierungsvorrichtung 200 weist einen Träger 210 und vier Sammelschienen 220, 220', 220" und 220‴ auf. Selbstverständlich ist es in diesem Zusammenhang denkbar, dass eine andere Anzahl von Sammelschienen 220 vorgesehen ist.

Der Träger 210 weist eine Vielzahl von Zinken 211 auf, welche angefaste Endbereiche 212 aufweisen. Zudem ist zu erkennen, dass der Träger 210 Zentrierungsvorrichtungen in Form von Noppen oder Stiften aufweist, welche zumindest in zugehörige Bohrungen in den beiden mittleren Sammelschienen 220' 220" aufgenommen werden können.

Der Träger 210 weist drei Bereiche auf, welche durch Stege abgetrennt sind, und somit drei Bereiche zum festgelegten Aufnehmen der Sammelschienen 220, 220', 220" und 220‴ bereitstellt. Dabei ist eine vordere Sammelschiene 220 in einem vorderen Bereich aufgenommen, die beiden mittleren Sammelschienen 220' und 220‴ in einem mittlere Bereich aufgenommen und eine hintere Sammelschiene 220‴ in einen hinteren Bereich aufgenommen. Relative Angaben, wie "vordere" und "hintere", beziehen sich auch hier auf einen Einbauzustand des Zellenpakets bzw. des Energiemoduls.

Der vordere Bereich und der hintere Bereich des Trägers 210 weisen Bereiche auf, um einen Anschlussbereich 223 der vorderen und hinteren Sammelschiene 220 und 220‴ aufnehmen zu können.

Zudem kann jeder der Bereiche des Trägers 210 einen Klebestreifen 240 aufweisen, um die Sammelschienen 220, 220', 220" und 220‴ mit dem Träger 210 zu verbinden, das heißt an ihm befestigen zu können.

Die in FIG. 5a gezeigten Sammelschienen 220 weisen jeweils eine Vielzahl von Zinken 221 auf. Zudem sind die Sammelschienen 220 aus unterschiedlichen Materialien gefertigt. So ist beispielsweise die vordere Sammelschiene 220 aus Aluminium, die angrenzende mittlere Sammelschiene 220' aus Kupfer, die andere mittlere Sammelschiene 220" aus Aluminium und die hintere Sammelschiene 220‴ aus Kupfer gebildet.

Um die mittleren beiden Sammelschienen 220' und 220" in einem vorherigen Arbeitsschritt verbinden zu können, ist vorzugsweise eine Bimetallplatte 250 vorgesehen. Die beiden Materialien Aluminium und Kupfer lassen sich nur sehr aufwendig direkt verschweißen, daher wird die Bimetallplatte 250 verwendet, welche eine erste Seite aus Aluminium und eine zweite Seite aus Kupfer aufweist. Anstatt die Sammelschienen 220' und 220" direkt zu verschweißen, wird somit die Seite der Bimetallplatte 250 aus Aluminium mit der Sammelschiene 220" verschweißt. Entsprechend wird die Seite der Bimetallplatte 250, welche aus Kupfer ausgebildet ist, mit der Sammelschiene 220' verschweißt.

Zwischen den Sammelschienen 220 und dem Träger 210 sind Gewindeplatten 230 vorgesehen. Insbesondere ist der Bereich des Trägers 210, welcher die Anschlussbereiche 223 der Sammelschienen 220 und 220‴ aufnimmt auch dazu ausgebildet, die Gewindeplatte 230 aufnehmen zu können.

FIG. 5b zeigt die Kontaktierungsvorrichtung 200 gemäß FIG. 3a in einem zusammengebauten Zustand. Wie zu erkennen, sind die Sammelschienen 220, 220', 220", 220‴ in dem Träger 210 aufgenommen. Insbesondere ist auch zu erkennen, dass die Zinken 211 des Trägers 210 länger ausgebildet sind als die Zinken 221 der Sammelschienen 220, 220', 220" und 220"'. Dies bietet den Vorteil, dass lediglich die Zinken 211 des Trägers 210 angefaste Endbereiche 212 aufweisen müssen. Dementsprechend sind die Sammelschienen 220, 220', 220" und 220‴ bzw. deren Zinken 221 einfacher herzustellen.

Zudem ist zu erkennen, dass die Stege des Trägers 210 zwischen dem vorderen und dem mittleren sowie zwischen dem mittleren und dem hinteren Bereich auch dazu dienen, die Sammelschienen 220 und 220' bzw. die Sammelschienen 220" und 220‴ elektrisch voneinander zu isolieren.

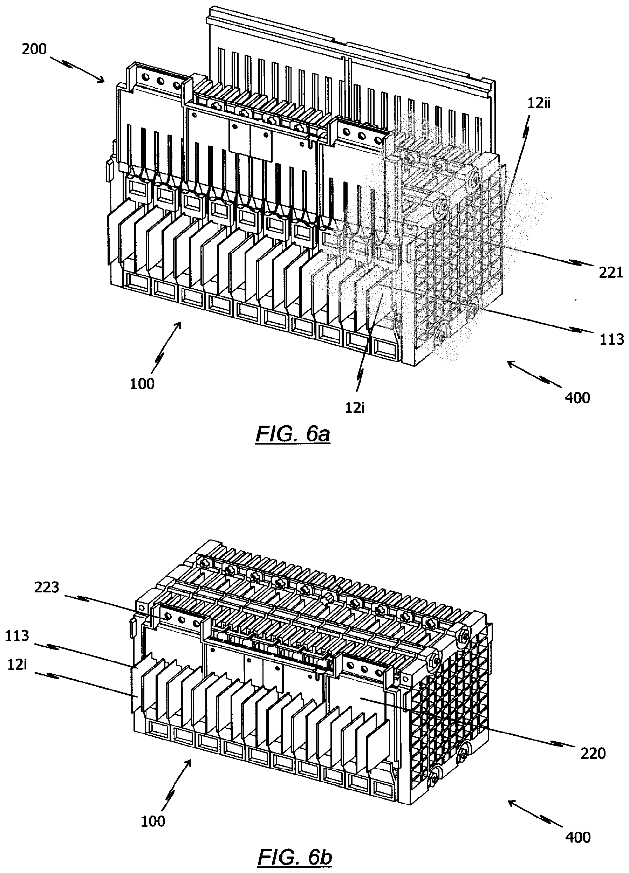

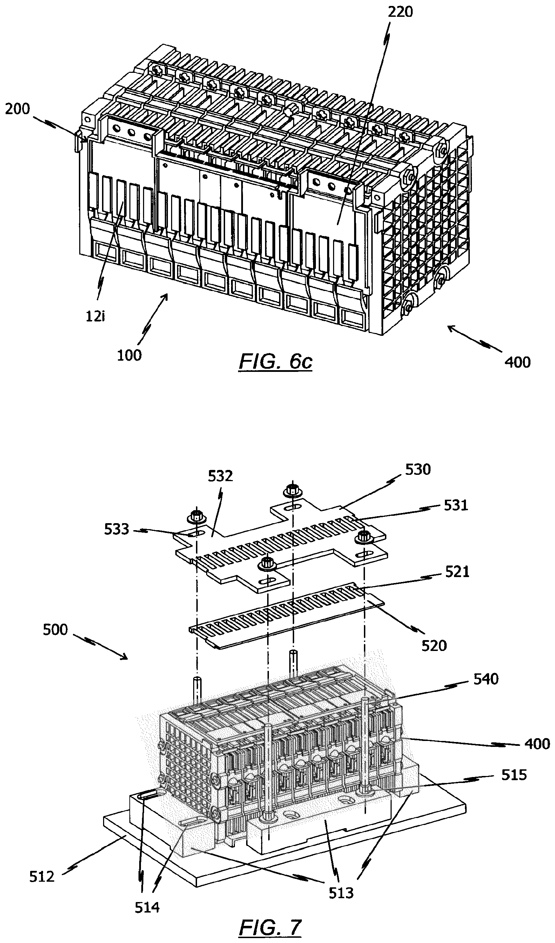

Die FIGS. 6a, 6b und 6c zeigen das Energiespeichermodul 10 in unterschiedlichen Fertigungsschritten (Zuständen).

So zeigt die FIG. 6a das Zellenpaket 100 und zwei Kontaktierungsvorrichtungen 200 vor einem Aufschieben der Kontaktierungsvorrichtungen 200.

Die FIG. 6b zeigt das Zellenpaket 100 und die Kontaktierungsvorrichtungen 200 in einem aufgeschobenen bzw. aufgesteckten Zustand. Dabei ist zu erkennen, dass die beiden Kontaktierungsvorrichtungen 200 nicht identisch ausgebildet sind bzw. sein müssen. Insbesondere ist zu erkennen, dass lediglich eine der Kontaktierungsvorrichtungen 200 die Anschlussbereiche 223 der Sammelschiene 220 und 220‴ aufweist. Dementsprechend ist der Träger 210 entweder mit oder ohne Bereiche zum Aufnehmen der Anschlussbereiche 223 ausgebildet.

In den FIG. 6a und FIG. 6b weisen die ersten und zweiten flächig ausgebildeten Anschlussfahnen 12i und 12ii der Lithiumionen-Pouchzellen 11 noch eine Schutzfolie 113 auf, welche in einem Zwischenschritt zwischen FIG. 6b und FIG. 6c entfernt wird. Die Schutzfolie 113 dient insbesondere zum Schutz der Oberfläche der Anschlussfahnen 12i und 12ii.

In FIG. 6c ist das Zellenpaket 100 und die Kontaktierungsvorrichtung 200 zu erkennen, wobei die Anschlussfahnen 12i und 12ii der Lithiumionen-Pouchzellen 11 derart gebogen wurden, dass sie einen elektrischen Kontakt zwischen den Sammelschienen 220, 220', 220" und 220‴ und den elektrochemischen Zellbaugruppen 10 ermöglichen. Insbesondere ist auch zu erkennen, dass Kontaktflächen zwischen den Anschlussfahnen 12i und 12ii und den Sammelschienen 220, 220', 220" und 220‴ durch die flächige Ausbildung der Anschlussfahnen 12i, 12ii relativ groß sind.

Das Zellenpaket 100 und dort insbesondere die Endplatten 130 weisen zudem, wie in den FIG. 6a bis FIG. 6c zu erkennen ist, Zentrierungseinrichtungen auf. Diese sind insbesondere an den Endplatten 130 in Form von sich zu den Seiten erstreckenden Vorsprüngen zu erkennen.

Auch die Kontaktierungsvorrichtungen 200, insbesondere der Träger 210 weist Zentrierungseinrichtungen auf, welche in FIG. 6a beispielsweise in Form von sich mit den Zinken des Trägers parallel erstreckenden Streben dargestellt sind.

Des Weiteren weist der Träger 210, wie ebenfalls in FIG. 6a zu erkennen, in einem oberen Bereich eine Art Schiene auf, welche sich in oberen Bereichen der Zellträger 15 der Vielzahl von erfindungsgemäßen elektrochemischen Zellbaugruppen 10 befestigen lässt. Dabei handelt es sich insbesondere um eine Rastvorrichtung.

In FIG. 6b ist zudem dargestellt, dass der Träger 210 in einem unteren Bereich der Zellträger 15 der Vielzahl von erfindungsgemäßen elektrochemischen Zellbaugruppen 10 aufnehmbar ist. Dieser untere Bereich kann gleichzeitig einen Anschlag ausbilden, damit die Kontaktierungsvorrichtungen 200 nur bis zu einer bestimmten Position auf die Anschlussfahnen 12i und 12ii aufschiebbar sind.

Zum Zusammenbau des erfindungsgemäßen Energiespeichermoduls 400 sind aufeinanderfolgende Verfahrensschritte anzuwenden:
Zunächst werden die Vielzahl der erfindungsgemäßen elektrochemischen Zellbaugruppen 10 bereitgestellt. Im Anschluss daran erfolgt ein stapelförmiges Anordnen der Vielzahl der erfindungsgemäßen elektrochemischen Zellbaugruppen 10 zu einem Zellpaket 100. Hierbei wird das Zellenpaket entsprechend dem Aufbau aus FIG. 3 ausgebildet. Dabei sind die ersten und zweiten Anschlussfahnen 12i und 12ii auf sich gegenüberliegenden ersten und zweiten Seiten des Zellenpakets 100 angeordnet.

Im nächsten Schritt wird die mindestens eine Kontaktierungsvorrichtung 200 auf die flächig ausgebildeten Anschlussfahnen 12i und 12ii aufgeschoben. Daraufhin werden die Anschlussfahnen 12i und 12ii umgebogen und zwar derart, dass die Vielzahl der erfindungsgemäßen elektrochemischen Zellbaugruppen 10 mit der mindestens einen Kontaktierungsvorrichtung 200 elektrisch verbindbar oder verbunden ist. Anschließend werden die Anschlussfahnen 12i und 12ii dann an die mindestens eine Kontaktierungsvorrichtung 200 unter Verwendung eines mehrteiligen Schweißwerkzeugs 500 geschweißt.

FIG. 7 zeigt das für den Zusammenbau des erfindungsgemäßen Energiespeichermoduls 400 benutzte mehrteilige Schweißwerkzeug 500. Das mehrteilige Schweißwerkzeug 500 besteht aus drei Hauptelementen, einer Aufnahmevorrichtung 510, einer Isolierplatte 520, sowie einer Druckplatte 530.

Die Aufnahmevorrichtung 510 weist eine Basisplatte 512 mit einer ersten Oberfläche und einer zweiten Oberfläche auf, wobei auf einer der ersten oder zweiten Oberfläche Positionselemente 513 angeordnet werden. Die Positionselemente 513 weisen vorzugsweise eine im Wesentlichen quaderförmige Form auf, können jedoch auch andere geometrische Formen aufweisen. Die Positionselemente 513 sind ferner voneinander beabstandet auf der Basisplatte 512 der Aufnahmevorrichtung 510 angeordnet, sodass ein Raum ausgebildet wird, welche die Aufnahme des Zellenpakets 100 in einer seitlichen Position ermöglicht. Eine seitliche Position ist dabei eine Position in der die sich gegenüberliegenden, die ersten und zweiten Anschlussfahnen 12i und 12ii aufweisenden, ersten und zweiten Seiten des Zellenpakets 100 in einer horizontalen Ebene angeordnet sind.

Zur Befestigung der Positionselemente 513 auf der Basisplatte 512 können die Positionselemente 513 und die Basisplatte 512 erste Aussparungen 514 aufweisen, in welche Befestigungselemente, wie beispielsweise Schrauben, aufgenommen werden können. Die Ausrichtung der Positionselemente 513 auf der Basisplatte 512 kann dabei entsprechend dem Aufbau des Zellenpakets 100 erfolgen. Ferner können die Positionselemente 513 zweite Aussparungen 515 zur Aufnahme von Befestigungselementen 540, wie beispielsweise Schrauben, aufweisen, welche zur Verspannung des Zellenpakets 100 in dem mehrteiligen Schweißwerkzeug 500 benötigt werden.

Die Isolierplatte 520 wird auf der Seite des Zellenpakets 100, welche der durch die Kavität aufgenommen Seite des Zellenpakets 100 gegenüberliegt, positioniert. Dabei ist die Isolierplatte 520 zumindest bereichsweise oder vollständig auf der Seite des Zellenpakets 100, welche der durch die Kavität aufgenommenen Seite des Zellenpakets 100 gegenüberliegt, angeordnet. Die Isolierplatte 520 weist zudem Aussparungen 521 auf, welche fluchtend mit den zu verbindenden Bereichen der ersten und zweiten flächig ausgebildeten Anschlussfahnen 12i und 12ii und der mindestens einen Kontaktierungsvorrichtung 200 ausgerichtet sind. Hierdurch wird gewährleistet, dass durch den Schweißvorgang lediglich die für die elektrisch leitende Verbindung relevanten Bereiche der Anschlussfahnen 12i und 12ii und der Kontaktierungsvorrichtung 200 miteinander verbunden werden. Zusätzlich werden Bereiche und/oder Elemente des Zellenpakets 100 bzw. des Energiespeichermoduls 400 vor unerwünschten, während des Schweißprozesses auftretenden Einflüssen geschützt.

Die Isolierplatte 520 kann dabei vorzugsweise aus einem Kunststoff sein, wie beispielsweise Acrylnitril-Butadien-Styrol, gefertigt sein, jedoch können auch andere Materialien genutzt werden.

Wie in FIG. 7 außerdem zu sehen, wird die Druckplatte 530 auf der Isolierplatte 520 angeordnet. Die Druckplatte weist dabei ebenfalls Aussparungen 531 auf, welche mit den Aussparungen 521 der Isolierplatte 520 fluchtend angeordnet und ausgerichtet werden. Hierdurch wird Zugänglichkeit zu den zu verschweißenden Bereichen des Zellenpakets 100 gewährleistet. Die Druckplatte 530 weist außerdem an ihren seitlichen Randbereichen Ausbuchtungen 532 aus, welche mit Aussparungen 533 versehen sind. Die Aussparungen 533 der Ausbuchtungen 532 sind mit den Aussparungen 515 der Positionselemente 513 vertikal beabstandet fluchtend ausgerichtet, sodass das Zellenpaket 100 über Befestigungselemente 540, welche in den Aussparungen 515 und 533 der Positionselemente 513 und der Ausbuchtungen 532 der Druckplatte 530 aufgenommen sind, mit dem mehrteiligen Schweißwerkzeug 500 verspannt wird.

Somit kann in einfacher Weise eine gegen unerwünschte Bewegungen wirkende Positionierung und Verspannung des Zellenpakets 100 in dem mehrteiligen Schweißwerkzeug 500 erzielt werden. Zudem werden lediglich die erforderlichen Bereiche des Zellenpakets 100 bzw. des Energiespeichermoduls 400 durch den Schweißprozess beeinflusst.

Die Druckplatte 530 kann vorzugsweise aus einem Metall oder einer Metalllegierung, wie beispielsweise Aluminium oder einer Aluminiumlegierung, gefertigt sein, Eine Fertigung der Druckplatte 530 aus anderen Materialien ist jedoch ebenfalls möglich.

Zum Verschweißen der ersten und zweiten Anschlussfahnen 12i und 12ii mit der mindestens einen Kontaktierungsvorrichtung 200 wird vorzugsweise ein Laserstrahlschweißverfahren gewählt, welches die Einhaltung der hohen Anforderungen an den Fertigungsprozess des Energiespeichermoduls 400 durch geeignete Schweißparameter vorteilhaft unterstützt.

### Bezugszeichenliste

- 1: Fahrzeug
- 10: Elektrochemische Zellbaugruppe
- 11: Lithiumionen-Pouchzelle
- 12i: erste Anschlussfahne
- 12ii: zweite Anschlussfahne
- 13: Flächenelement
- 14: Temperatursensor
- 15: Zellträger
- 100: Zellenpaket
- 113: Schutzfolie
- 130: Endplatte
- 140: Stäbe
- 150: Schaumplatte
- 200: Kontaktierungsvorrichtung
- 210: Träger
- 211: Zinken des Trägers
- 212: Angefaster Endbereich der Zinken
- 220: Sammelschiene
- 220': Sammelschiene
- 220": Sammelschiene
- 220‴: Sammelschiene
- 212: Zinken der Sammelschiene
- 223: Anschlussbereich
- 230: Gewindeplatte
- 240: Klebestreifen
- 250: Bimetallplatte
- 300: Energiespeicher-Steuerungseinrichtung
- 310: Erster flexibler Sammelschienenverbinder
- 320: Zweiter flexibler Sammelschienenverbinder
- 330: Shunt
- 400: Energiespeichermodul
- 500: Mehrteiliges Schweißwerkzeug
- 510: Aufnahmevorrichtung
- 512: Basisplatte
- 513: Positionselemente
- 514: Erste Aussparungen
- 515: Zweite Aussparungen
- 520: Isolierplatte
- 521: Aussparungen
- 530: Druckplatte
- 531: Aussparungen
- 532: Ausbuchtungen
- 533: Aussparungen
- 540: Befestigungselemente

## Patentansprüche

1. Energiespeichermodul (400), welches Folgendes aufweist:
- eine Vielzahl von elektrochemischen Zellbaugruppen (10), wobei jede elektrochemische Zellbaugruppe (10) Folgendes aufweist:
- mindestens zwei Lithiumionen-Pouchzellen (11);
- ein Flächenelement (13) zur Ausrichtung der mindestens zwei Lithiumionen-Pouchzellen (11); und
- einen Zellträger (15),
wobei die mindestens zwei Lithiumionen-Pouchzellen (11) in dem Zellträger (15) angeordnet sind und miteinander in einer elektrischen Verbindung stehen, wobei die mindestens zwei Lithiumionen-Pouchzellen (11) ferner eine erste und zweite Anschlussfahne (12i, 12ii) aufweisen, wobei die erste und zweite Anschlussfahne (12i, 12ii) der mindestens zwei Lithiumionen-Pouchzellen (11) flächig ausgebildet sind und sich zumindest im Wesentlichen senkrecht von zwei gegenüberliegenden Seiten der mindestens zwei Lithiumionen-Pouchzellen (11) aus erstrecken, und wobei das Flächenelement (13), vorzugsweise mittig, in dem Zellträger (15) angeordnet ist, und wobei das Flächenelement (13) ferner von den mindestens zwei Lithiumionen-Pouchzellen (11) sandwichartig umgeben ist und zumindest bereichsweise mit diesen in Kontakt steht;
- eine Energiespeicher-Steuerungseinrichtung (300) zur Steuerung des Betriebs des Energiespeichers, wobei die Energiespeicher-Steuerungseinrichtung (300) eine Leiterplatte aufweist;
- mindestens zwei flexible Sammelschienenverbinder (310, 320);
- einen Shunt (330); und
- mindestens eine Kontaktierungsvorrichtung (200) zum elektrischen Kontaktieren der Vielzahl von elektrochemischen Zellbaugruppen (10),
wobei die Vielzahl von elektrochemischen Zellbaugruppen (10) stapelförmig angeordnet ist, derart dass sie ein Zellenpaket (100) ausbildet, und zumindest teilweise untereinander elektrisch in Verbindung steht, wobei der Shunt (330) eine erste Oberfläche und eine zweite Oberfläche aufweist, wobei die erste Oberfläche des Shunts (330) zumindest bereichsweise mit den mindestens zwei flexiblen Sammelschienenverbindern (310, 320) und die zweite Oberfläche zumindest bereichsweise mit der Leiterplatte der Energiespeicher-Steuerungseinrichtung (300) in Kontakt steht, und wobei die mindestens eine Kontaktierungsvorrichtung (200) im Wesentlichen kammförmig ausgebildet ist und eine Vielzahl von Zinken (211, 221) aufweist, und wobei jede der ersten und zweiten Anschlussfahnen (12i, 12ii) jeweils zwischen zwei benachbarten Zinken (211, 221) der mindestens einen Kontaktierungsvorrichtung (220) aufgenommen ist.

2. Energiespeichermodul (400) nach Anspruch 1,
wobei die erste und zweite Oberfläche des Shunts (330) mittels einer Schweißnaht mit den mindestens zwei flexiblen Sammelschienenverbindern (310, 320) und der Leiterplatte der Energiespeicher-Steuerungseinrichtung (300) verbunden sind, vorzugsweise mittels einer Laserstrahlschweißnaht und/oder einer Ultraschallschweißnaht.

3. Energiespeichermodul (400) nach Anspruch 1 oder 2,
wobei die mindestens eine Kontaktierungsvorrichtung (200) ferner mindestens eine Sammelschiene (220) und mindestens einen Träger (210) aufweist, und wobei die mindestens eine Sammelschiene (220) und der mindestens eine Träger (210) kammförmig ausgebildet sind und die Vielzahl von Zinken (211, 221) aufweisen,
wobei die mindestens eine Sammelschiene (220) und der mindestens eine Träger (210) vorzugsweise aufnehmbar bzw. aufgenommen und/oder an ihm vorzugsweise befestigbar bzw. befestigt ist.

4. Energiespeichermodul (400) nach einem der Ansprüche 1 bis 3,
wobei das Zellenpaket (100) zwei Endplatten (130) aufweist, welche an beiden Enden der stapelförmig angeordneten Vielzahl von elektrochemischen Zellbaugruppen (10) vorgesehen sind.

5. Energiespeichermodul (400) nach Anspruch 4,
wobei die Endplatten (130) Bohrungen aufweisen, welche fluchtend mit Bohrungen der Vielzahl von elektrochemischen Zellbaugruppen (10) angeordnet und ausgerichtet sind, und wobei das Zellenpaket (100) ferner eine Vielzahl von Stäben (140) aufweist, welche durch die Bohrungen der Vielzahl von elektrochemischen Zellbaugruppen (10) und der Endplatten (130) führbar bzw. geführt sind, um diese zu verbinden, und/oder
wobei jeweils eine Schaumplatte (150) zwischen äußeren Zellbaugruppen (10) der stapelförmig angeordneten Vielzahl von elektrochemischen Zellbaugruppen (10) und den Endplatten (130) vorgesehen ist.

6. Energiespeichermodul (400) nach einem der Ansprüche 1 bis 5,
wobei ein erster flexibler Sammelschienenverbinder (310) der mindestens zwei flexiblen Sammelschienenverbinder (310, 320) mit einer Anschlussklemme des Energiespeichermoduls (400) elektrisch verbunden ist und ein zweiter flexibler Sammelschienenverbinder (320) der mindestens zwei flexiblen Sammelschienenverbinder (310, 320) mit dem Zellenpaket (100) elektrisch verbunden ist, und/oder
wobei das Energiespeichermodul (400) ferner ein Modulgehäuse und einen Deckel aufweist.

7. Energiespeichermodul (400) nach einem der Ansprüche 1 bis 6,
wobei die erste und zweite Anschlussfahne (12i, 12ii) der mindestens zwei Lithiumionen-Pouchzellen (11) biegbar sind, und/oder
wobei die mindestens zwei Lithiumionen-Pouchzellen (11) in Reihe geschaltet oder parallelgeschaltet sind.

8. Energiespeichermodul (400) nach einem der Ansprüche 1 bis 7,
wobei das Flächenelement (13) zumindest bereichsweise über eine Klebschicht mit den mindestens zwei Lithiumionen-Pouchzellen (11) in Verbindung steht,
wobei die Klebschicht vorzugsweise einen Acrylklebstoff, einen Epoxidklebstoff und/oder ein doppelseitiges Klebeband aufweist.

9. Energiespeichermodul (400) nach einem der Ansprüche 1 bis 8,
wobei das Flächenelement (13) einen Temperatursensor (14) aufweist, und/oder
wobei das Flächenelement (13) aus einem Metall oder einer Metalllegierung gefertigt ist.

10. Verfahren zum Zusammenbau eines Energiespeichermoduls (400) nach einem der Ansprüche 1 bis 9,
wobei das Verfahren folgende Schritte aufweist:
- Bereitstellen einer Vielzahl von elektrochemischen Zellbaugruppen (10), wobei jede der Vielzahl von elektrochemischen Zellbaugruppen (10) mindestens zwei Lithiumionen-Pouchzellen (11), einen Zellträger (15) und Flächenelement (13) zur Ausrichtung der mindestens zwei Lithiumionen-Pouchzellen (11) aufweist und wobei jede der mindestens zwei Lithiumionen-Pouchzellen (11) eine erste und zweite flächige Anschlussfahne (12i, 12ii) aufweist, die sich zumindest im Wesentlichen senkrecht von zwei gegenüberliegenden Seiten der mindestens zwei Lithiumionen-Pouchzellen (11) aus erstrecken;
- stapelförmiges Anordnen der Vielzahl von elektrochemischen Zellbaugruppen (10) zu einem Zellenpaket (100);
- Aufschieben von mindestens einer Kontaktierungsvorrichtung (200) auf die flächig ausgebildeten Anschlussfahnen (12i, 12ii), wobei die mindestens eine Kontaktierungsvorrichtung (200) im Wesentlichen kammförmig ausgebildet ist und eine Vielzahl von Zinken (211, 221) aufweist, und wobei jede der ersten und zweiten Anschlussfahnen (12i, 12ii) jeweils zwischen zwei benachbarten Zinken (211, 221) der mindestens einen Kontaktierungsvorrichtung (220) aufgenommen wird;
- Biegen der Anschlussfahnen (12i, 12ii) derart, dass die Vielzahl von elektrochemischen Zellbaugruppen (10) mit der mindestens einen Kontaktierungsvorrichtung (200) elektrisch verbindbar oder verbunden ist;
- Schweißen der Anschlussfahnen (12i, 12ii) an die mindestens eine Kontaktierungsvorrichtung (200) unter Verwendung eines mehrteiligen Schweißwerkzeugs (500)
- Anordnen von einer Energiespeicher-Steuerungseinrichtung (300) zur Steuerung des Betriebs des Energiespeichers mit einer Leiterplatte, von mindestens zwei flexiblen Sammelschienenverbinder (310, 320), einem Shunt (330), und mindestens einer Kontaktierungsvorrichtung (200) zum elektrischen Kontaktieren der Vielzahl von elektrochemischen Zellbaugruppen (10), wobei der Shunt (330) eine erste Oberfläche und eine zweite Oberfläche aufweist, wobei die erste Oberfläche des Shunts (330) zumindest bereichsweise mit den mindestens zwei flexiblen Sammelschienenverbindern (310, 320) und die zweite Oberfläche zumindest bereichsweise mit der Leiterplatte der Energiespeicher-Steuerungseinrichtung (300) in Kontakt steht.

11. Verfahren nach Anspruch 10,
wobei das mehrteilige Schweißwerkzeug (500) eine Aufnahmevorrichtung (510), eine Isolierplatte (520) und eine Druckplatte (530) aufweist.

12. Verfahren nach Anspruch 11,
wobei die Aufnahmevorrichtung (510) eine Basisplatte (512) mit voneinander beabstandeten Positionselementen (513) aufweist, wobei die Positionselemente (513) derart auf der Basisplatte (512) angeordnet sind, sodass das Zellenpaket (100) mit der ersten oder zweiten Seite der Basisplatte (512) zugewandt in die Aufnahmevorrichtung (510) aufnehmbar bzw. aufgenommen ist, und/oder
wobei die Isolierplatte (520) zumindest bereichsweise auf der zweiten oder ersten Seite des Zellenpakets (100) positioniert ist, und wobei die Isolierplatte (520) Aussparungen (521) aufweist, welche fluchtend mit zu verbindenden Bereichen der Anschlussfahnen (12i, 12ii) und der mindestens einen Kontaktierungsvorrichtung (200) ausgerichtet sind, und/oder wobei die Isolierplatte (520) aus einem Kunststoff gefertigt ist, und/oder
wobei die Druckplatte (530) auf der Isolierplatte (520) mit dieser fluchtend angeordnet und ausgerichtet ist, und wobei die Druckplatte (530) ferner Aussparungen (531) aufweist und über eine Schraubverbindung mit der Spannvorrichtung (510) verbunden ist, und/oder wobei die Druckplatte (530) aus einem Metall oder einer Metalllegierung, vorzugsweise aus Aluminium oder einer Aluminiumlegierung, gefertigt ist.

13. Verfahren nach einem der Ansprüche 10 bis 12,
wobei die mindestens eine Kontaktierungsvorrichtung (200) mindestens eine Sammelschiene (220) und mindestens einen Träger (210) aufweist,
wobei die mindestens eine Sammelschiene (220) und der mindestens eine Träger (210) kammförmig ausgebildet sind und eine Vielzahl von Zinken (211, 221) aufweisen.

14. Verfahren nach einem der Ansprüche 10 bis 13,
wobei das Zellenpaket (100) zwei Endplatten (130) aufweist, welche an beiden Enden der stapelförmig angeordneten Vielzahl von elektrochemischen Zellbaugruppen (10) vorgesehen sind.

15. Verfahren nach einem der Ansprüche 10 bis 14,
wobei das Schweißen der Anschlussfahnen (12i, 12ii) an die mindestens eine Kontaktierungsvorrichtung (200) mittels eines Laserstrahlschweißverfahrens durchgeführt wird.

## Claims

1. Energy store module (400) which comprises the following:
- a multiplicity of electrochemical cell assemblies (10), each electrochemical cell assembly (10) comprising the following:
- at least two lithium-ion pouch cells (11);
- a flat element (13) for aligning the at least two lithium-ion pouch cells (11); and
- a cell carrier (15),
the at least two lithium-ion pouch cells (11) being arranged in the cell carrier (15) and being electrically connected to one another, the at least two lithium-ion pouch cells (11) comprising, furthermore, a first and second terminal lug (12i, 12ii), the first and second terminal lug (12i, 12ii) of the at least two lithium-ion pouch cells (11) being of flat configuration and extending at least substantially perpendicularly from two opposite sides of the at least two lithium-ion pouch cells (11), and the flat element (13) being arranged in the cell carrier (15), preferably centrally, and the flat element (13) being surrounded, furthermore, in a sandwich-like manner by the at least two lithium-ion pouch cells (11) and being in contact with them at least in regions;
- an energy store control device (300) for controlling the operation of the energy store, the energy store control device (300) having a printed circuit board;
- at least two flexible busbar connectors (310, 320);
- a shunt (330); and
- at least one contacting apparatus (200) for making electrical contact with the multiplicity of electrochemical cell assemblies (10),
the multiplicity of electrochemical cell assemblies (10) being arranged in a stack-shaped manner, in such a way that they configure a cell pack (100), and are electrically connected at least partially among one another, the shunt (330) having a first surface and a second surface, the first surface of the shunt (330) being in contact at least in regions with the at least two flexible busbar connectors (310, 320), and the second surface being in contact at least in regions with the printed circuit board of the energy store control device (300), and the at least one contacting apparatus (200) being of substantially comb-shaped configuration and having a multiplicity of prongs (211, 221), and each of the first and second terminal lugs (12i, 12ii) being received in each case between two adjacent prongs (211, 221) of the at least one contacting apparatus (220).

2. Energy store module (400) according to Claim 1,
the first and second surface of the shunt (330) being connected by means of a welded seam to the at least two flexible busbar connectors (310, 320) and the printed circuit board of the energy store control device (300), preferably by means of a laser beam welded seam and/or an ultrasonic welding seam.

3. Energy store module (400) according to Claim 1 or 2,
the at least one contacting apparatus (200) comprising, furthermore, at least one busbar (220) and at least one carrier (210), and the at least one busbar (220) and the at least one carrier (210) being of comb-shaped configuration and comprising the multiplicity of prongs (211, 221),
the at least one busbar (220) and the at least one carrier (210) preferably being capable of being received or being received on it and/or preferably being capable of being fastened being fastened to it.

4. Energy store module (400) according to one of Claims 1 to 3,
the cell pack (100) having two end plates (130) which are provided at the two ends of the multiplicity of electrochemical cell assemblies (10) arranged in a stack-shaped manner.

5. Energy store module (400) according to Claim 4,
the end plates (130) having bores which are arranged and oriented flush with bores of the multiplicity of electrochemical cell assemblies (10), and the cell pack (100) having, furthermore, a multiplicity of rods (140) which can be guided or are guided through the bores of the multiplicity of electrochemical cell assemblies (10) and the end plates (130), in order to connect them, and/or
in each case one foam plate (150) being provided between the outer cell assemblies (10) of the multiplicity of electrochemical cell assemblies (10) arranged in a stack-shaped manner and the end plates (130).

6. Energy store module (400) according to one of Claims 1 to 5,
a first flexible busbar connector (310) of the at least two flexible busbar connectors (310, 320) being connected electrically to a connector terminal of the energy store module (400), and a second flexible busbar connector (320) of the at least two flexible busbar connectors (310, 320) being connected electrically to the cell pack (100), and/or
the energy store module (400) having, furthermore, a module housing and a cover.

7. Energy store module (400) according to one of Claims 1 to 6,
the first and second terminal lug (12i, 12ii) of the at least two lithium-ion pouch cells (11) being flexible, and/or
the at least two lithium-ion pouch cells (11) being connected in series or in parallel.

8. Energy store module (400) according to one of Claims 1 to 7,
the flat element (13) being connected at least in regions via an adhesive layer to the at least two lithium-ion pouch cells (11),
the adhesive layer preferably comprising an acrylic adhesive, an epoxy adhesive and/or a double-sided adhesive tape.

9. Energy store module (400) according to one of Claims 1 to 8,
the flat element (13) having a temperature sensor (14), and/or
the flat element (13) being manufactured from metal or metal alloy.

10. Method for assembling an energy store module (400) according to one of Claims 1 to 9,
the method having the following steps:
- providing of a multiplicity of electrochemical cell assemblies (10), each of the multiplicity of electrochemical cell assemblies (10) comprising at least two lithium-ion pouch cells (11), a cell carrier (15) and flat element (13) for orienting the at least two lithium-ion pouch cells (11), and each of the at least two lithium-ion pouch cells (11) comprising a first and second flat terminal lug (12i, 12ii) which extend at least substantially perpendicularly from two opposite sides of the at least two lithium-ion pouch cells (11);
- arranging of the multiplicity of electrochemical cell assemblies (10) in a stack-shaped manner to form a cell pack (100);
- pushing of at least one contacting apparatus (200) onto the terminal lugs (12i, 12ii) of flat configuration, the at least one contacting apparatus (200) being of substantially comb-shaped configuration and having a multiplicity of prongs (211, 221), and each of the first and second terminal lugs (12i, 12ii) being received in each case between two adjacent prongs (211, 221) of the at least one contacting apparatus (220);
- bending of the terminal lugs (12i, 12ii) in such a way that the multiplicity of electrochemical cell assemblies (10) can be connected or are connected electrically to the at least one contacting apparatus (200);
- welding of the terminal lugs (12i, 12ii) to the at least one contacting apparatus (200) with use of a multiple-part welding tool (500);
- arranging of an energy store control device (300) for controlling the operation of the energy store with a printed circuit board, at least two flexible busbar connectors (310, 320), a shunt (330), and at least one contacting apparatus (200) for electrical contacting of the multiplicity of electrochemical cell assemblies (10), the shunt (330) having a first surface and a second surface, the first surface of the shunt (330) being in contact at least in regions with the at least two flexible busbar connectors (310, 320), and the second surface being in contact at least in regions with the printed circuit board of the energy store control device (300).

11. Method according to Claim 10,
the multiple-part welding tool (500) having a receiving apparatus (510), an insulating plate (520) and a pressing plate (530).

12. Method according to Claim 11,
the receiving apparatus (510) having a base plate (512) with position elements (513) which are spaced apart from one another, the position elements (513) being arranged on the base plate (512) such that the cell pack (100) can be received or is received in the receiving apparatus (510) with the first or second side facing the base plate (512), and/or
the insulating plate (520) being positioned at least in regions on the second or first side of the cell pack (100), and the insulating plate (520) having cut-outs (521) which are oriented flush with regions to be connected of the terminal lugs (12i, 12ii) and the at least one contacting apparatus (200), and/or
the insulating plate (520) being manufactured from plastic, and/or the pressing plate (530) being arranged and oriented on the insulating plate (520) so as to be flush with the latter, and the pressing plate (530) having, furthermore, cut-outs (531) and being connected via a screw connection to the tensioning apparatus (510), and/or
the pressing plate (530) being manufactured from metal or metal alloy, preferably from aluminium or an aluminium alloy.

13. Method according to one of Claims 10 to 12,
the at least one contacting apparatus (200) having at least one busbar (220) and at least one carrier (210),
the at least one busbar (220) and the at least one carrier (210) being of comb-shaped configuration and having a multiplicity of prongs (211, 221).

14. Method according to one of Claims 10 to 13,
the cell pack (100) having two end plates (130) which are provided at the two ends of the multiplicity of electrochemical cell assemblies (10) arranged in a stack-shaped manner.

15. Method according to one of Claims 10 to 14,
the welding of the terminal lugs (12i, 12ii) to the at least one contacting apparatus (200) being carried out by means of a laser beam welding method.

## Revendications

1. Module accumulateur d'énergie (400), lequel possède ce qui suit :
- une pluralité de sous-ensembles de cellules électrochimiques (10), chaque sous-ensemble de cellules électrochimiques (10) possédant ce qui suit :
- au moins deux cellules Pouch au lithium-ion (11) ;
- un élément plat (13) servant à l'orientation des au moins deux cellules Pouch au lithium-ion (11) ; et
- un porte-cellules (15),
les au moins deux cellules Pouch au lithium-ion (11) étant disposées dans le porte-cellules (15) se trouvant en une liaison électrique entre elles, les au moins deux cellules Pouch au lithium-ion (11) possédant en outre une première et une deuxième languette de raccordement (12i, 12ii), la première et la deuxième languette de raccordement (12i, 12ii) des au moins deux cellules Pouch au lithium-ion (11) étant de configuration plane et s'étendant au moins sensiblement perpendiculairement depuis deux côtés opposés des au moins deux cellules Pouch au lithium-ion (11), et l'élément plat (13) étant disposé dans le porte-cellules (15), de préférence au centre, et l'élément plat (13) étant en outre entouré par les au moins deux cellules Pouch au lithium-ion (11) à la manière d'un sandwich et se trouvant en contact avec celles-ci au moins par certaines zones ;
- un dispositif de commande d'accumulateur d'énergie (300) destiné à commander le fonctionnement de l'accumulateur d'énergie, le dispositif de commande d'accumulateur d'énergie (300) possédant un circuit imprimé ;
- au moins deux connecteurs de barre-bus flexibles (310, 320) ;
- un shunt (330) ; et
- au moins un arrangement de mise en contact (200) servant à la mise en contact de la pluralité de sous-ensembles de cellules électrochimiques (10),
la pluralité de sous-ensembles de cellules électrochimiques (10) étant disposés sous forme de pile de telle sorte qu'ils forment un paquet de cellules (100) et se trouvant au moins partiellement en liaison électrique entre eux, le shunt (330) possédant une première surface et une deuxième surface, la première surface du shunt (330) se trouvant en contact au moins par certaines zones avec les au moins deux connecteurs de barre-bus flexibles (310, 320) et la deuxième surface au moins par certaines zones avec le circuit imprimé du dispositif de commande d'accumulateur d'énergie (300), et l'au moins un arrangement de mise en contact (200) étant configuré sensiblement en forme de peigne et possédant une pluralité de dents (211, 221), et chacune de la première et de la deuxième languette de raccordement (12i, 12ii) étant respectivement accueillie entre deux dents (211, 221) voisines de l'au moins un arrangement de mise en contact (220).

2. Module accumulateur d'énergie (400) selon la revendication 1,
la première et la deuxième surface du shunt (330) étant reliées au moyen d'un cordon de soudure aux au moins deux connecteurs de barre-bus flexibles (310, 320) et au circuit imprimé du dispositif de commande d'accumulateur d'énergie (300), de préférence au moyen d'un cordon de soudure par rayon laser et/ou d'un cordon de soudure par ultrasons.

3. Module accumulateur d'énergie (400) selon la revendication 1 ou 2,
l'au moins un arrangement de mise en contact (200) possédant en outre au moins une barre-bus (220) et au moins un élément porteur (210), et l'au moins une barre-bus (220) et l'au moins un élément porteur (210) étant réalisés en forme de peigne et possédant la pluralité de dents (211, 221),
l'au moins une barre-bus (220) et l'au moins un élément porteur (210) pouvant de préférence être ou étant accueillis et/ou pouvant de préférence être ou étant fixée à lui.

4. Module accumulateur d'énergie (400) selon l'une des revendications 1 à 3, le paquet de cellules (100) possédant deux plaques d'extrémité (130), lesquelles sont présentes aux deux extrémités de la pluralité de sous-ensembles de cellules électrochimiques (10) disposés en forme de pile.

5. Module accumulateur d'énergie (400) selon la revendication 4,
les plaques d'extrémité (130) possédant des perçages qui sont disposés et orientés à fleur avec des perçages de la pluralité de sous-ensembles de cellules électrochimiques (10), et le paquet de cellules (100) possédant en outre une pluralité de barres (140), lesquelles peuvent être ou sont guidées à travers les perçages de la pluralité de sous-ensembles de cellules électrochimiques (10) et des plaques d'extrémité (130) afin de relier celles-ci, et/ou une plaque en mousse (150) étant respectivement présente entre les sous-ensembles de cellules (10) extérieures de la pluralité de sous-ensembles de cellules électrochimiques (10) disposés en forme de pile et les plaques d'extrémité (130).

6. Module accumulateur d'énergie (400) selon l'une des revendications 1 à 5,
un premier connecteur de barre-bus flexible (310) des au moins deux connecteurs de barre-bus flexibles (310, 320) étant relié électriquement à une borne de raccordement du module accumulateur d'énergie (400) et un deuxième connecteur de barre-bus flexible (320) des au moins deux connecteurs de barre-bus flexibles (310, 320) étant relié électriquement au paquet de cellules (100), et/ou
le module accumulateur d'énergie (400) possédant en outre un boîtier de module et un couvercle.

7. Module accumulateur d'énergie (400) selon l'une des revendications 1 à 6, la première et la deuxième languette de raccordement (12i, 12ii) des au moins deux cellules Pouch au lithium-ion (11) étant pliables, et/ou les au moins deux cellules Pouch au lithium-ion (11) étant branchées en série ou branchées en parallèle.

8. Module accumulateur d'énergie (400) selon l'une des revendications 1 à 7, l'élément plat (13) se trouvant en liaison au moins par certaines zones avec les au moins deux cellules Pouch au lithium-ion (11) par le biais d'une couche adhésive,
la couche adhésive possédant de préférence un adhésif acrylique, un adhésif à base d'époxy et/ou un ruban adhésif double face.

9. Module accumulateur d'énergie (400) selon l'une des revendications 1 à 8, l'élément plat (13) possédant une sonde de température (14), et/ou l'élément plat (13) étant fabriqué en un métal ou un alliage de métal.

10. Procédé pour assembler un module accumulateur d'énergie (400) selon l'une des revendications 1 à 9,
le procédé comprenant les étapes suivantes :
- fourniture d'une pluralité de sous-ensembles de cellules électrochimiques (10), chacun de la pluralité de sous-ensembles de cellules électrochimiques (10) possédant au moins deux cellules Pouch au lithium-ion (11), un porte-cellules (15) et un élément plat (13) servant à l'orientation des au moins deux cellules Pouch au lithium-ion (11) et chacune des au moins deux cellules Pouch au lithium-ion (11) possédant une première et une deuxième languette de raccordement (12i, 12ii) plates, lesquelles s'étendent au moins sensiblement perpendiculairement depuis deux côtés opposés des au moins deux cellules Pouch au lithium-ion (11) ;
- disposition en forme de pile de la pluralité de sous-ensembles de cellules électrochimiques (10) en un paquet de cellules (100) ;
- enfilement d'au moins un arrangement de mise en contact (200) sur les languettes de raccordement (12i, 12ii) de configuration plane, l'au moins un arrangement de mise en contact (200) étant configuré sensiblement en forme de peigne et possédant une pluralité de dents (211, 221), et chacune de la première et de la deuxième languette de raccordement (12i, 12ii) étant respectivement accueillie entre deux dents (211, 221) voisines de l'au moins un arrangement de mise en contact (220) ;
- pliage des languettes de raccordement (12i, 12ii) de telle sorte que la pluralité de sous-ensembles de cellules électrochimiques (10) peuvent être ou sont reliés électriquement à l'au moins un arrangement de mise en contact (200) ;
- soudage des languettes de raccordement (12i, 12ii) à l'au moins un arrangement de mise en contact (200) en utilisant un outil de soudage (500) en plusieurs parties ;
- disposition d'un dispositif de commande d'accumulateur d'énergie (300) destiné à commander le fonctionnement de l'accumulateur d'énergie et comprenant un circuit imprimé, d'au moins deux connecteurs de barre-bus flexibles (310, 320), d'un shunt (330) et d'au moins un arrangement de mise en contact (200) en vue de la mise en contact électrique de la pluralité de sous-ensembles de cellules électrochimiques (10), le shunt (330) possédant une première surface et une deuxième surface, la première surface du shunt (330) se trouvant en contact au moins par certaines zones avec les au moins deux connecteurs de barre-bus flexibles (310, 320) et la deuxième surface au moins par certaines zones avec le circuit imprimé du dispositif de commande d'accumulateur d'énergie (300).

11. Procédé selon la revendication 10,
l'outil de soudage (500) en plusieurs parties possédant un arrangement d'accueil (510), une plaque isolante (520) et une plaque de pressage (530).

12. Procédé selon la revendication 11,
l'arrangement d'accueil (510) possédant une plaque de base (512) pourvue d'éléments de positionnement (513) espacés les uns des autres, les éléments de positionnement (513) étant disposés sur la plaque de base (512) de telle sorte que le paquet de cellules (100) peut être ou est accueilli dans l'arrangement d'accueil (510) avec le premier ou le deuxième côté faisant face à la plaque de base (512), et/ou
la plaque isolante (520) étant positionnée au moins par certaines zones sur le deuxième ou le premier côté du paquet de cellules (100), et la plaque isolante (520) possédant des cavités (521), lesquelles sont orientées à fleur avec les zones à raccorder des languettes de raccordement (12i, 12ii) et l'au moins un arrangement de mise en contact (200), et/ou la plaque isolante (520) étant fabriquée en une matière plastique, et/ou la plaque de pressage (530) étant disposée et orientée sur la plaque isolante (520) à fleur avec celle-ci et la plaque de pressage (530) possédant en outre des cavités (531) et étant reliée à l'arrangement de serrage (510) par le biais d'une liaison vissée, et/ou la plaque de pressage (530) étant fabriquée en métal ou un alliage de métal, de préférence en aluminium ou un alliage d'aluminium.

13. Procédé selon l'une des revendications 10 à 12,
l'au moins un arrangement de mise en contact (200) possédant au moins une barre-bus (220) et au moins un élément porteur (210), l'au moins une barre-bus (220) et l'au moins un élément porteur (210) étant réalisés en forme de peigne et possédant la pluralité de dents (211, 221).

14. Procédé selon l'une des revendications 10 à 13,
le paquet de cellules (100) possédant deux plaques d'extrémité (130), lesquelles sont présentes aux deux extrémités de la pluralité de sous-ensembles de cellules électrochimiques (10) disposés en forme de pile.

15. Procédé selon l'une des revendications 10 à 14,
le soudage des languettes de raccordement (12i, 12ii) à l'au moins un arrangement de mise en contact (200) étant effectué au moyen d'un procédé de soudage par rayon laser.
